# EUROPÄISCHE PATENTSCHRIFT

(11) **EP 3 361 080 B1**
(45) Veröffentlichungstag und Bekanntmachung des Hinweises auf die Patenterteilung: **12.01.2022**
(21) Anmeldenummer: 18154457.8
(22) Anmeldetag: 31.01.2018
(51) Int. Cl.: F02F 1/24, F01M 13/04, F02B 77/08, F02F 11/00, F01M 11/02

(54) **DICHTVERBAND AUS ZYLINDERKOPF, ZYLINDERKOPFDICHTUNG UND KURBELGEHÄUSE**
SEALING COMPOSITE MADE FROM CYLINDER HEAD, CYLINDER HEAD GASKET AND CRANKCASE
ENSEMBLE JOINT DE CULASSE, JOINT DE CULASSE ET CARTER DE VILEBREQUIN

(30) Priorität: 10.02.2017 DE 102017001255
(43) Veröffentlichungstag der Anmeldung: 15.08.2018
(73) Patentinhaber: MAN Truck & Bus SE, 80995 München (DE)
(72) Erfinder: Berner, Armin, 91567 Herrieden (DE); Leitel, Thomas, 91126 Schwabach (DE); Schibalsky, Walter, 90455 Nürnberg (DE)
(74) Vertreter: v. Bezold & Partner Patentanwälte - PartG mbB

(56) Entgegenhaltungen:
- WO-A1-96/19655
- DE-A1-102004 010 472
- DE-A1-102010 023 812
- GB-A- 2 049 808
- JP-U- H0 313 412

## Beschreibung

Die Erfindung betrifft einen Verbrennungsmotor für ein Kraftfahrzeug, eine Zylinderkopfdichtung für einen Verbrennungsmotor, einen Zylinderkopf für einen Verbrennungsmotor und ein Kurbelgehäuse für einen Verbrennungsmotor. Die Erfindung bezieht sich ferner auf ein Kraftfahrzeug, insbesondere ein Nutzfahrzeug, und ein Verfahren zum Abführen von aus einer Verbrennungskammer eines Verbrennungsmotors stammendem Leckagegas.

In hochbelasteten Verbrennungsmotoren erfolgt die Abdichtung zwischen dem Zylinderkopf und dem Kurbelgehäuse mit einer Zylinderkopfdichtung. Häufig ist die Zylinderkopfdichtung so ausgestaltet, dass sie sich über alle Zylinder erstreckt. Das Kurbelgehäuse und der Zylinderkopf werden mit mehreren über den Zylinder verteilten hochfesten Schrauben verspannt, um bei den auftretenden Verbrennungsdrücken (zum Beispiel bis zu 300 bar und darüber) sicher die geforderte Pressung auf die Dichtung auszuüben. Die äußeren Abmaße einer Zylinderkopfdichtung sind so dimensioniert, dass kein Spalt zwischen dem Zylinderkopf und dem Kurbelgehäuse entsteht. Infolge der hohen Schraubenkräfte werden der Zylinderkopf, die Zylinderkopfdichtung und das Kurbelgehäuse nicht nur im Bereich der Verbrennungskammer fest verpresst, sondern auch in den Außenbereichen des Dichtverbands. Infolge der hohen Presskräfte besteht auch hier eine gute metallische Abdichtung. In Fällen, in denen der Motor auswechselbare Zylinderlaufbuchsen aufweist, wird die Dichtung gegen die im Kurbelgehäuse eingebaute Zylinderlaufbuchse gepresst. Im Idealfall bleibt der Dichtverband über die gesamte Motorlebensdauer unauffällig und es treten weder Verbrennungsgase noch sonstige Medien, die zwischen dem Zylinderkopf und dem Kurbelgehäuse ausgetauscht werden, in einem technisch relevanten Maß aus.

Im Stand der Technik sind Zylinderkopfdichtungen bekannt, die aus unterschiedlichen Gründen Nuten aufweisen. Derartige Zylinderkopfdichtungen sind beispielsweise in der DE 43 37 758 C1, der DE 10 2004 054 815 A1 und der DE 195 34 962 A1 offenbart.

Die DE 10 2004 010 472 A1 offenbart eine Zylinderkopfdichtung mit einem Gasexpansionsraum zur Aufnahme, Expansion und Abkühlung von Leckagegas. Der Gasexpansionsraum ist über einen Entlüftungskanal mit einem Durchbruch für Schraubenlöcher verbunden, um das Leckagegas an die Außenluft abzuführen.

Die WO 96/19655 A1 offenbart einen Zylinderblock mit Bohrungen zur Aufnahme von Schrauben zur Befestigung eines Zylinderkopfes. Die Oberseiten der Bohrungen öffnen sich in Ölablass- und Entlüftungsdurchgänge an einer Position, die mit der Oberseite des Zylinderblocks übereinstimmt.

Die GB 2 049 808 A offenbart einen Aluminium-Zylinderkopf mit Querschlitzen auf der Brennraumseite. Die durch die Schlitze definierten Räume ermöglichen eine freie Ausdehnung der Aluminiumabschnitte des Zylinderkopfes während des Betriebs des Motors und vermeiden so die Bildung von Spannungen im Zylinderkopf infolge von Ausdehnungen durch die hohen Temperaturen, die während des Betriebs des Motors erreicht werden.

Zylinderkopfdichtungen in Verbrennungsmotoren sind typischerweise Flachdichtungen, die in geringem Maße undicht sein können, d.h. keine 100-prozentige Dichtigkeit zur Verfügung stellen. Aufgrund des hohen Zünddrucks in der Verbrennungskammer kann unter bestimmten Voraussetzungen ein gewisser kleiner Teil der Verbrennungsgase bei der Zündung des Kraftstoff-Luftgemisches entweichen. Dies ist bis zu einer gewissen Grenze tolerierbar. Eine derartige Dichtung wird trotzdem als "technisch dicht" bezeichnet.

Im Lauf eines Motorenlebens kann sich der Dichtverband setzen und/oder Verschleißen, sodass eine Leckage von Verbrennungsgasen (sogenannter Schleichgase) zunehmen kann. Andere Störungen und Relaxation können ebenfalls zur Erhöhung der Leckage führen.

Kommt es beim Zünden zum Austritt von Leckagegas, so gelangt dieses zwischen den Dichtflächen in die Zwischenräume zwischen dem Kurbelgehäuse und der Zylinderkopfdichtung oder der Zylinderkopfdichtung und dem Zylinderkopf. Die gute metallische Abdichtung im Innen- und im Außenbereich des Dichtverbands kann verhindern, dass das Leckagegas zurück in die Verbrennungskammer gelangt oder weiter nach außen vordringt. Das Leckagegas kann sich folglich in Bereichen und Hohlräumen (zum Beispiel vertieft angeordnete Kernlochdeckel, Bohrungen usw.) um die Verbrennungskammer herum innerhalb des Dichtverbands sammeln. Im Laufe der Zeit kann ein Überdruck entstehen, der den Dichtverband oder andere Motorbauteile schädigen kann. Typische Schädigungsbilder hierbei können die Schädigung von Kopfschrauben, die Absprengung von Schraubenköpfen und das Eindrücken von Kernlochdeckeln, wodurch Kühlmittel in die Zwischenräume gelangt, sich im Dichtbereich verteilt und es zu bleibenden Verformungen der Zylinderkopfdichtung durch das inkompressible Kühlmedium kommen kann, sein. Zudem können Elastomere im äußeren Dichtbereich und darüber hinaus geschädigt werden, ein Überdruck kann sich im Kühlmittel einstellen, die gesamte Dichtfläche kann geschädigt werden und der Kopfverband kann beispielsweise auf die Laufbuchse hämmern und das Kurbelgehäuse schädigen.

Ausgehend von den oben beschriebenen Problemen, die im Zusammenhang mit dem Austritt von Leckagegas aus der Verbrennungskammer auftreten können, ist es eine Aufgabe der Erfindung, den Dichtverband aus Zylinderkopf, Zylinderkopfdichtung und Kurbelgehäuse zu verbessern.

Diese Aufgabe wird durch einen Verbrennungsmotor, eine Zylinderkopfdichtung, einen Zylinderkopf, ein Kurbelgehäuse und ein Verfahren zum Abführen von aus einer Verbrennungskammer eines Verbrennungsmotors stammendem Leckagegas mit den Merkmalen der unabhängigen Ansprüche gelöst. Vorteilhafte Ausführungsformen und Anwendungen der Erfindung ergeben sich aus den abhängigen Ansprüchen.

Der Verbrennungsmotor für ein Kraftfahrzeug, insbesondere ein Nutzfahrzeug, weist einen Zylinderkopf, insbesondere einen Einzylinder-Zylinderkopf oder einen Mehrzylinder-Zylinderkopf auf. Der Verbrennungsmotor weist zudem ein Kurbelgehäuse, eine Zylinderkopfdichtung, insbesondere eine Einzylinder-Zylinderkopfdichtung oder eine Mehrzylinder-Zylinderkopfdichtung, auf. Die Zylinderkopfdichtung ist zwischen dem Zylinderkopf und dem Kurbelgehäuse angeordnet ist. Der Zylinderkopf, die Zylinderkopfdichtung und das Kurbelgehäuse bilden einen Dichtbereich zum Abdichten mindestens einer Verbrennungskammer des Verbrennungsmotors. Der Verbrennungsmotor weist zudem eine erste Ausnehmung auf. Die erste Ausnehmung ist innerhalb des Dichtbereichs und beabstandet zu der mindestens einen Verbrennungskammer angeordnet. Die erste Ausnehmung ist insbesondere ein Schraubenloch oder ein Gusskernloch, das vorzugsweise mit einem Kernlochverschlussdeckel verschlossen ist. Der Verbrennungsmotor weist ferner zusätzlich einen ersten Leckagegaskanal auf. Der erste Leckagegaskanal erstreckt sich von der ersten Ausnehmung zu einer ersten, zur Umgebung des Verbrennungsmotors freiliegenden Fläche. Alternativ oder zusätzlich erstreckt sich der erste Leckagegaskanal von der ersten Ausnehmung zu einem Entlüftungskanal des Verbrennungsmotors. Der erste Leckagegaskanal kann insbesondere als eine Vertiefung ausgebildet sein.

Erfindungsgemäss ist die erste Ausnehmung in einer Dichtfläche der Zylinderkopfdichtung vorgesehen und ein Schraubenloch, und ist der erste Leckagegaskanal in einer Dichtfläche der Zylinderkopfdichtung vorgesehen; oder - die erste Ausnehmung ist in einer Dichtfläche des Kurbelgehäuses vorgesehen und ein Schraubenloch oder ein verschlossenes Gusskernloch, und der erste Leckagegaskanal ist in einer Dichtfläche des Kurbelgehäuses vorgesehen und sich zu der ersten, zur Umgebung des Verbrennungsmotors freiliegenden Fläche erstreckt; oder - der erste Leckagegaskanal ist in einer Dichtfläche des Zylinderkopfes vorgesehen und sich von der ersten Ausnehmung zu dem Entlüftungskanal des Verbrennungsmotors erstreckt.

Das erfindungsgemäße Vorsehen des ersten Leckagegaskanals ermöglicht es, dass sich in der ersten Ausnehmung angesammeltes Leckagegas aus der ersten Ausnehmung abgeleitet wird. Folglich wird verhindert, dass sich in der ersten Ausnehmung ein Überdruck durch sich ansammelndes Leckagegas bildet, der den Dichtverband schädigen kann. Die Dichtflächen des Zylinderkopfes, des Kurbelgehäuses und der Zylinderkopfdichtung bilden den Dichtbereich. Insbesondere kann das Leckagegas in eine Umgebung des Verbrennungsmotors geleitet werden. Hierzu kann der Leckagegaskanal in eine zur Umgebung des Verbrennungsmotors freiliegende Fläche münden. Die freiliegende Fläche kann beispielsweise eine Außenumfangsfläche oder eine freiliegende Stirnfläche sein. Das Leckagegas kann durch den Leckagegaskanal auch über die Zwischenstation einer Entlüftung des Verbrennungsmotors in eine Umgebung des Verbrennungsmotors abgegeben werden. Hierzu kann der Leckagegaskanal in einen Entlüftungskanal des Verbrennungsmotors münden. Das Leckagegas wird insbesondere aus Schraubenlöchern und im Bereich von verschlossenen Gusskernlöchern abgeleitet, da sich diese Bereiche als besonders kritische Bereiche herausgestellt haben. Gemäß einer Ausführungsform kann der Verbrennungsmotor ferner eine zweite Ausnehmung aufweisen. Die zweite Ausnehmung ist innerhalb des Dichtbereichs und beabstandet zu der mindestens einen Verbrennungskammer angeordnet. Die zweite Ausnehmung ist insbesondere ein Schraubenloch oder ein Gusskernloch, das vorzugsweise mit einem Kernlochverschlussdeckel verschlossen ist. Zusätzlich kann der Verbrennungsmotor einen zweiten Leckagegaskanal aufweisen. Der zweite Leckagegaskanal erstreckt sich von der zweiten Ausnehmung zu der ersten, zur Umgebung des Verbrennungsmotors freiliegenden Fläche, einer zweiten, zur Umgebung des Verbrennungsmotors freiliegenden Fläche, der ersten Ausnehmung dem ersten Leckagegaskanal und/oder dem Entlüftungskanal. Der zweite Leckagegaskanal ist insbesondere als eine Vertiefung ausgebildet. Das Vorsehen eines zweiten Leckagegaskanals ermöglicht, Leckagegas aus einer weiteren Ausnehmung abzuleiten. Je nach Bauraumsituation kann das Leckagegas durch den zweiten Leckagegaskanal beispielsweise direkt in die Umgebung abgegeben werden, zum Beispiel über die erste oder zweite freiliegende Fläche. Alternativ oder zusätzlich kann das Leckagegas durch den zweiten Leckagegaskanal über die Zwischenstufe der ersten Ausnehmung, des ersten Leckagegaskanals oder des Entlüftungskanals in die Umgebung abgegeben werden.

Vorteilhafterweise ist die zweite Ausnehmung in einer Dichtfläche des Zylinderkopfes, in einer Dichtfläche des Kurbelgehäuses und/oder in einer Dichtfläche der Zylinderkopfdichtung vorgesehen. Alternativ oder zusätzlich ist der zweite Leckagegaskanal in einer Dichtfläche des Zylinderkopfes, in einer Dichtfläche des Kurbelgehäuses und/oder in einer Dichtfläche der Zylinderkopfdichtung vorgesehen. Beispielsweise können eine erste und zweite Ausnehmung sowie ein erster und zweiter Leckagegaskanal alle in der gleichen Komponente (Zylinderkopf, Zylinderkopfdichtung, Kurbelgehäuse) vorgesehen sein. Allerdings ist es auch möglich, dass sich ein Leckagegaskanal durch mehrere Komponenten hindurch erstreckt, zum Beispiel die Zylinderkopfdichtung und das Kurbelgehäuse. Weiterhin ist es möglich, dass die Ausnehmung und der zugehörige Leckagegaskanal in unterschiedlichen Komponenten vorgesehen sind. So kann beispielsweise ein Leckagegas aus einer Ausnehmung, die sich einzig im Zylinderkopf oder dem Kurbelgehäuse erstreckt, durch einen Leckagegaskanal, der sich in der Zylinderkopfdichtung erstreckt und zu der Ausnehmung offen ist, abgeleitet werden. Ein Beispiel für eine derartige Ausnehmung ist ein mit einem Kernlochverschlussdeckel verschlossenes Gusskernloch zum Verschließen eines Wasserkerns des Zylinderkopfes oder des Kurbelgehäuses.

Der erste Leckagegaskanal und/oder der zweite Leckagegaskanal können insbesondere als eine Nut, eine Rille oder ein Schlitz ausgebildet werden. Dies ermöglicht eine Vielzahl von möglichen Fertigungstechniken für die Leckagegaskanäle, die je nach Anforderung und Möglichkeit gefertigt werden können.

In einem Ausführungsbeispiel ist die erste zur Umgebung des Verbrennungsmotors freiliegende Fläche eine Außenumfangsfläche des Zylinderkopfes, eine Außenumfangsfläche des Kurbelgehäuses und/oder eine Außenumfangsfläche der Zylinderkopfdichtung. So kann auf einfache Weise eine Entlüftung des Leckagegaskanals oder der Leckagegaskanäle ermöglicht werden. Alternativ oder zusätzlich kann der Entlüftungskanal einen Abschnitt einer Zylinderkopfentlüftung und/oder einen Abschnitt einer Kurbelkammerentlüftung bilden.

Ein besonders bevorzugtes Ausführungsbeispiel sieht hierbei vor, dass die mindestens eine Verbrennungskammer zwei nebeneinanderliegende Verbrennungskammern aufweist. Die erste Ausnehmung und/oder ist zwischen den nebeneinanderliegenden Verbrennungskammern angeordnet. Es wurde herausgefunden, dass insbesondere der Bereich zwischen den Verbrennungskammern, und hier insbesondere die Schraubenlöcher zwischen den Verbrennungskammern, ein kritischer Bereich ist. Durch das Ableiten des Leckagegases aus diesem kritischen Bereich können hier Schädigungen verhindert werden.

Gemäß einer weiteren Ausführungsvariante wird der erste Leckagegaskanal durch ein Umformverfahren, insbesondere ein Druckumformverfahren, vorzugsweise durch Einprägen, ausgebildet. Alternativ oder zusätzlich wird der erste Leckagegaskanal durch ein Zerspannungsverfahren, insbesondere ein Fräsverfahren, ausgebildet.

Die Erfindung betrifft auch eine Zylinderkopfdichtung eines Verbrennungsmotors. Die Zylinderkopfdichtung ist insbesondere eine Einzylinder-Zylinderkopfdichtung oder eine Mehrzylinder-Zylinderkopfdichtung. Die Zylinderkopfdichtung weist mindestens eine Brennraumöffnung, eine Außenumfangsfläche und eine erste Dichtfläche zur Abdichtung gegen ein Kurbelgehäuse oder einen Zylinderkopf auf. Die Zylinderkopfdichtung weist zudem eine erste Ausnehmung auf, die innerhalb der ersten Dichtfläche beabstandet zu der mindestens einen Brennraumöffnung angeordnet ist. Die erste Ausnehmung ist ein Schraubenloch. Die Zylinderkopfdichtung weist ferner einen ersten Leckagegaskanal auf. Der erste Leckagegaskanal erstreckt sich von der ersten Ausnehmung bis zu der Außenumfangsfläche und/oder einer Entlüftungsöffnung der Zylinderkopfdichtung.

Der erste Leckagegaskanal ist insbesondere als eine Vertiefung, die sich in der ersten Dichtfläche erstreckt, ausgebildet.

Das erfindungsgemäße Vorsehen des ersten Leckagegaskanals ermöglicht es, dass in der ersten Ausnehmung angesammeltes Leckagegas aus der ersten Ausnehmung abgeführt wird. Folglich wird verhindert, dass sich in der ersten Ausnehmung ein Überdruck durch sich ansammelndes Leckagegas bildet, der den Dichtverband schädigen kann. Das Leckagegas wird aus der ersten Ausnehmung in eine Umgebung des Verbrennungsmotors geleitet. Hierzu mündet der erste Leckagegaskanal bspw. in eine Außenumfangsfläche der Zylinderkopfdichtung.

Vorzugsweise weist die Zylinderkopfdichtung ferner eine zweite Ausnehmung, die innerhalb der ersten Dichtfläche und/oder einer zweiten Dichtfläche beabstandet zu der Brennraumöffnung angeordnet ist, auf. Die zweite Dichtfläche ist zu der ersten Dichtfläche entgegengesetzt. Die zweite Ausnehmung ist insbesondere ein Durchgangsloch, vorzugsweise ein Schraubenloch. Die Zylinderkopfdichtung weist zudem einen zweiten Leckagegaskanal, der sich von der zweiten Ausnehmung zu der Außenumfangsfläche, der ersten Ausnehmung, einer Entlüftungsöffnung der Zylinderkopfdichtung und/oder dem ersten Leckagegaskanal erstreckt, auf. Der zweite Leckagegaskanal ist insbesondere als eine Vertiefung, die sich in der ersten Dichtfläche oder der zweiten Dichtfläche erstreckt, ausgebildet.

In einer Ausführungsform weist die mindestens eine Brennraumöffnung zwei nebeneinanderliegende Brennraumöffnungen auf. Die erste Ausnehmung und/oder die zweite Ausnehmung ist zwischen den zwei nebeneinanderliegenden Brennraumöffnungen angeordnet. Wie bereits zuvor erläutert wurde, wurde herausgefunden, dass insbesondere der Bereich zwischen den Verbrennungskammern und somit den Brennraumöffnungen, und hier insbesondere die Schraubenlöcher, ein kritischer Bereich ist. Durch das Ableiten des Leckagegases aus diesem kritischen Bereich können hier Schädigungen verhindert werden.

In einem Ausführungsbeispiel ist die Zylinderkopfdichtung eine einlagige Zylinderkopfdichtung, zum Beispiel aus einem Metall. Alternativ kann die Zylinderkopfdichtung eine mehrlagige Zylinderkopfdichtung sein, die beispielsweise aus mehreren übereinandergelegten Lagen, zum Beispiel Metalllagen, gebildet ist. Der erste Leckagegaskanal und/oder der zweite Leckagegaskanal können sich vorzugsweise in einer Außenlage der mehrlagigen Zylinderkopfdichtung erstrecken. Dies ermöglicht eine einfache Fertigung der Leckagegaskanäle.

Die Erfindung betrifft weiterhin einen Zylinderkopf, insbesondere einen Einzylinder-Zylinderkopf oder einen Mehrzylinder-Zylinderkopf, für einen Verbrennungsmotor. Der Zylinderkopf weist mindestens eine Brennraumfläche zum Begrenzen mindestens einer Verbrennungskammer, eine Außenumfangsfläche und eine Dichtfläche zum Abdichten gegen eine Zylinderkopfdichtung auf. Außerdem weist der Zylinderkopf eine erste Ausnehmung, die innerhalb der Dichtfläche beabstandet zu der mindestens einen Brennraumfläche angeordnet ist, auf. Die erste Ausnehmung ist insbesondere ein Schraubenloch oder ein Gusskernloch, das vorzugsweise mit einem Kernlochverschlussdeckel verschlossen ist. Der Zylinderkopf weist zudem einen ersten Leckagegaskanal, der sich von der ersten Ausnehmung bis zu einem Entlüftungskanal des Zylinderkopfes erstreckt, auf. Der erste Leckagegaskanal ist insbesondere als eine Vertiefung, die sich in der Dichtfläche erstreckt, ausgebildet.

Erneut ermöglicht das erfindungsgemäße Vorsehen des ersten Leckagegaskanals, dass in der ersten Ausnehmung angesammeltes Leckagegas aus der ersten Ausnehmung abgeleitet wird.

Vorteilhafterweise weist die mindestens eine Brennraumfläche zwei nebeneinanderliegende Brennraumflächen für zwei nebeneinanderliegende Verbrennungskammern auf. Die erste Ausnehmung und/oder eine zweite Ausnehmung ist zwischen den zwei nebeneinanderliegenden Brennraumflächen angeordnet. Die zweite Ausnehmung ist innerhalb der Dichtfläche beabstandet zu der mindestens einen Brennraumfläche angeordnet und insbesondere ein Schraubenloch oder ein Gusskernloch, das vorzugsweise mit einem Kernlochverschlussdeckel verschlossen ist. Der Zylinderkopf weist einen zweiten Leckagegaskanal auf, der sich von der zweiten Ausnehmung zu der Außenumfangsfläche, der ersten Ausnehmung dem ersten Leckagegaskanal und/oder dem Entlüftungskanal erstreckt. Der zweite Leckagegaskanal ist insbesondere als eine Vertiefung, die sich in der Dichtfläche erstreckt, ausgebildet. Außerdem betrifft die Erfindung ein Kurbelgehäuse für einen Verbrennungsmotor. Das Kurbelgehäuse weist mindestens eine Verbrennungskammer, eine Außenumfangsfläche und eine Dichtfläche zum Abdichten gegen eine Zylinderkopfdichtung auf. Zudem weist das Kurbelgehäuse eine erste Ausnehmung auf, die innerhalb der Dichtfläche beabstandet zu der mindestens einen Verbrennungskammer angeordnet ist. Die erste Ausnehmung ist ein Schraubenloch oder ein Gusskernloch, das vorzugsweise mit einem Kernlochverschlussdeckel verschlossen ist. Zusätzlich weist das Kurbelgehäuse einen ersten Leckagegaskanal, der sich von der ersten Ausnehmung bis zu der Außenumfangsfläche des Kurbelgehäuses erstreckt, auf. Der erste Leckagegaskanal ist insbesondere als eine Vertiefung, die sich in der Dichtfläche erstreckt, ausgebildet.

Wie schon bei dem oben beschriebenen Verbrennungsmotor, bei der oben beschriebenen Zylinderkopfdichtung und dem oben beschriebenen Zylinderkopf ermöglicht das erfindungsgemäße Vorsehen des ersten Leckagegaskanals, dass in der ersten Ausnehmung angesammeltes Leckagegas aus der ersten Ausnehmung abgeführt wird.

Es wird darauf hingewiesen, dass der Verbrennungsmotor, die Zylinderkopfdichtung, der Zylinderkopf und/oder das Kurbelgehäuse wie hierin offenbart und insbesondere nach einer der obigen Ausführungsformen eine Mehrzahl von ersten Ausnehmungen, eine Mehrzahl von ersten Leckagegaskanälen, eine Mehrzahl von zweiten Ausnehmung und/oder eine Mehrzahl von zweiten Leckagegaskanälen aufweisen kann.

Zusätzlich betrifft die Erfindung ein Kraftfahrzeug, insbesondere Nutzfahrzeug, aufweisend einen Verbrennungsmotor, eine Zylinderkopfdichtung, einen Zylinderkopf oder ein Kurbelgehäuse wie hierin offenbart.

Die Erfindung betrifft außerdem ein Verfahren zum Abführen von aus einer Verbrennungskammer eines Verbrennungsmotors stammendem Leckagegas, insbesondere Schleichgas, aus einem Dichtbereich zwischen einem Zylinderkopf, einer Zylinderkopfdichtung und einem Kurbelgehäuse des Verbrennungsmotors zum Abdichten der Verbrennungskammer. Das Verfahren weist den Schritt des Sammelns des Leckagegases in mindestens einer innerhalb des Dichtbereichs gebildeten Ausnehmung auf. Die Ausnehmung ist insbesondere ein Schraubenloch oder ein verschlossenes Gusskernloch. Die Ausnehmung ist zu der Verbrennungskammer des Verbrennungsmotors beabstandet. Das Verfahren weist zudem den Schritt des geführten Ableitens des Leckagegases aus der mindestens einen Ausnehmung außerhalb des Dichtbereichs in eine Umgebung des Verbrennungsmotors und/oder in eine Entlüftung des Verbrennungsmotors auf. Bei der Entlüftung handelt es sich insbesondere um eine Kurbelgehäuseentlüftung und/oder eine Zylinderkopfdichtung. wobei;
- die erste Ausnehmung in einer Dichtfläche der Zylinderkopfdichtung vorgesehen und ein Schraubenloch ist, und der erste Leckagegaskanal in einer Dichtfläche der Zylinderkopfdichtung vorgesehen ist; oder
- die erste Ausnehmung in einer Dichtfläche des Kurbelgehäuses vorgesehen ist und ein Schraubenloch oder ein verschlossenes Gusskernloch ist, und der erste Leckagegaskanal in einer Dichtfläche des Kurbelgehäuses vorgesehen ist und sich zu der ersten, zur Umgebung des Verbrennungsmotors freiliegenden Fläche erstreckt; oder
- der erste Leckagegaskanal in einer Dichtfläche des Zylinderkopfes vorgesehen ist und sich von der ersten Ausnehmung zu dem Entlüftungskanal des Verbrennungsmotors erstreckt.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Schnitt durch einen Bereich eines Verbrennungsmotors;
- Figur 2: eine schematische Ansicht eines Dichtverbands zwischen einem Zylinderkopf, einer Zylinderkopfdichtung und einem Kurbelgehäuse;
- Figur 3A: eine Draufsicht auf einen Bereich einer Mehrzylinder-Zylinderkopfdichtung;
- Figur 3B: einen (Längs-) Querschnitt der Mehrzylinder-Zylinderkopfdichtung;
- Figur 3C: ein vergrößertes Detail A des Querschnitts der Zylinderkopfdichtung aus Figur 3B;
- Figur 4: eine Draufsicht auf einen Bereich einer Unterseite eines Mehrzylinder-Zylinderkopfes;
- Figur 5: eine perspektivische Ansicht eines Bereichs einer Unterseite und eines Außenumfangs eines Mehrzylinder-Zylinderkopfes;
- Figur 6: eine Draufsicht auf einen Bereich einer Oberseite eines Kurbelgehäuses; und
- Figur 7: eine perspektivische Ansicht eines Bereichs einer Oberseite und eines Außenumfangs eines Kurbelgehäuses.

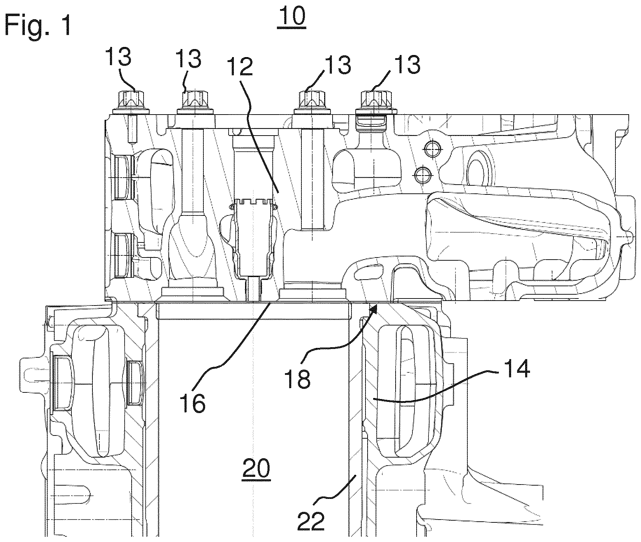

Die Figur 1 zeigt einen Schnitt durch einen Bereich eines Verbrennungsmotors 10. Der Verbrennungsmotor 10 weist einen Zylinderkopf 12, ein Kurbelgehäuse 14 und eine Zylinderkopfdichtung 16 auf. Die Zylinderkopfdichtung 16 ist zwischen dem Zylinderkopf 12 und dem Kurbelgehäuse 16 angeordnet. Der Zylinderkopf 12 ist mit einer Mehrzahl von Schrauben 13 an dem Kurbelgehäuse 14 angebracht, wobei die Zylinderkopfdichtung 16 eingeklemmt ist. Dadurch bilden der Zylinderkopf 12, das Kurbelgehäuse 14 und die Zylinderkopfdichtung 16 einen Dichtbereich 18 zum Abdichten der Verbrennungskammer 20. Der Verbrennungsmotor 10 kann eine Mehrzahl von Verbrennungskammern 20 aufweisen. Zudem kann in einigen Ausführungsformen der Verbrennungsmotor 10 eine Zylinderlaufbuchse 22 aufweisen, die in einer Zylinderbohrung des Kurbelgehäuses 14 eingesetzt ist, wie in Figur 1 dargestellt.

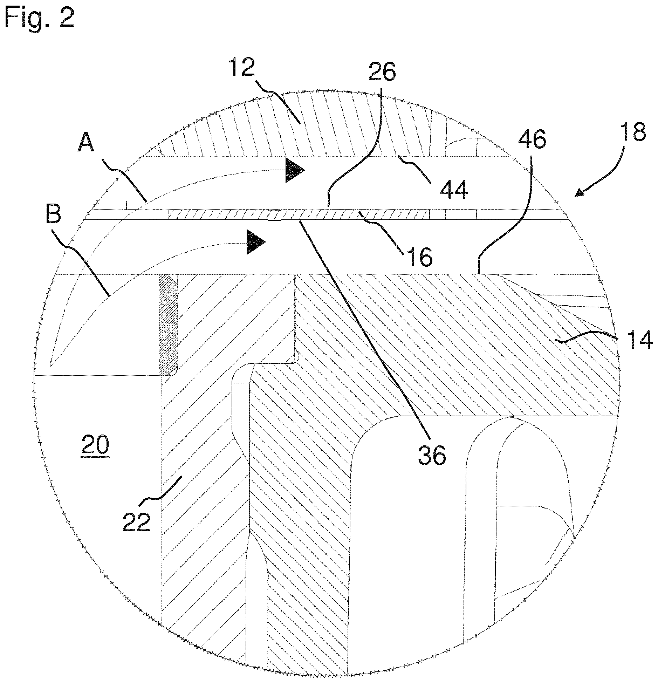

Die Figur 2 zeigt wie Leckagegase aus der Verbrennungskammer 20 in Zwischenräume in den Dichtbereich 18 gelangen können. Es wird darauf hingewiesen, dass die Figur 2 rein schematisch ist und Abstände zwischen dem Zylinderkopf 12 und der Zylinderkopfdichtung 16 sowie der Zylinderkopfdichtung 16 und dem Kurbelgehäuse 18 zeigt, um die Leckage verständlicher zu beschreiben. Tatsächlich liegt im Einbauzustand eine Dichtfläche 44 des Zylinderkopfes 12 an einer ersten Dichtfläche 26 der Zylinderkopfdichtung 16 an. Ebenso liegt eine zweite Dichtfläche 36 der Zylinderkopfdichtung 16, die entgegengesetzt zu der ersten Dichtfläche 26 ist, an einer Dichtfläche 46 des Kurbelgehäuses 18 an.

Aufgrund der hohen Verbrennungs- und Zünddrücke kann während des Betriebs des Verbrennungsmotors 10 Leckagegas aus der Verbrennungskammer 20 zwischen die Dichtflächen 44 und 26 und zwischen die Dichtflächen 36 und 46 gelangen. Dies ist in Figur 2 durch die Pfeile A und B gekennzeichnet. Wie nachstehend detailliert erläutert wird, kann sich dieses Leckagegas, das auch als Schleichgas bezeichnet wird, in Ausnehmungen im Dichtungsbereich 18 (den Dichtflächen 26, 36, 44, 46) ansammeln.

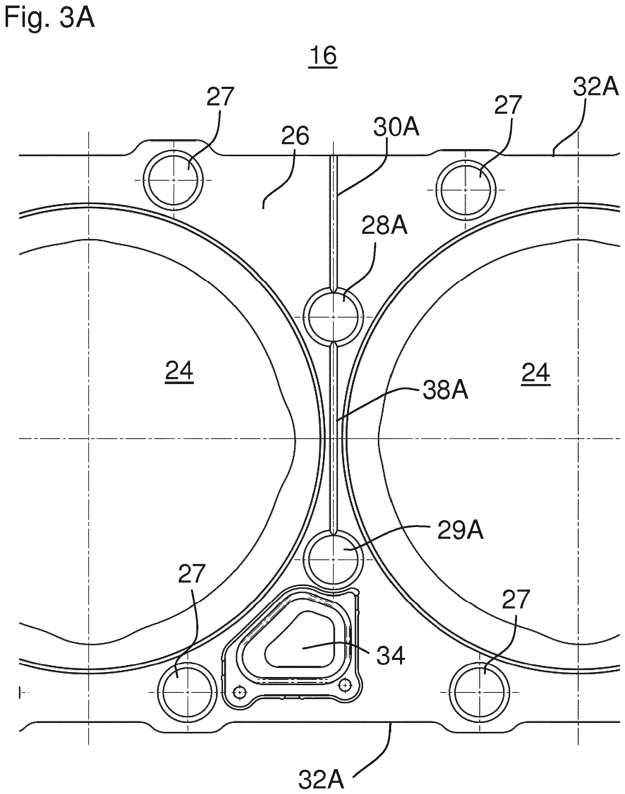

Unter Bezugnahme auf die Figuren 3A bis 3C ist nachstehend eine beispielhafte Zylinderkopfdichtung 16 beschrieben, die ein geführtes Ableiten des Leckagegases ermöglicht.

Das Leckagegas kann sich insbesondere in einer ersten Ausnehmung 28A und einer zweiten Ausnehmung 29A der Zylinderkopfdichtung 16 ansammeln. Die Ausnehmungen 28A, 29A sind als Schraubenlöcher vorgesehen, durch die die Kopfschrauben 13 (siehe Figur 1) zum Einschrauben in das Kurbelgehäuse 14 (siehe ebenfalls Figur 1) geführt werden können. Die Ausnehmungen 28A, 29A sind zwischen und beabstandet zu zwei nebeneinanderliegenden Brennraumöffnungen 24 der Zylinderkopfdichtung 16 angeordnet.

Um die Brennraumöffnungen 24 der Zylinderkopfdichtung 16 erstreckt sich eine erste Dichtfläche 26 zum Abdichten gegen einen Zylinderkopf 12 oder ein Kurbelgehäuse 14 (siehe Figuren 1 und 2). Die Ausnehmungen 28A, 29A sind innerhalb der ersten Dichtfläche 26 angeordnet, d.h. von der ersten Dichtfläche 26 umgeben. In der ersten Dichtfläche 26 erstrecken sich ein erster Leckagegaskanal 30A und ein zweiter Leckagegaskanal 38A.

Der erste Leckagegaskanal 30A erstreckt sich zwischen der ersten Ausnehmung 28A und einer Außenumfangsfläche 32A. Leckagegas aus der Verbrennungskammer 20 (siehe Figuren 1 und 2), das sich in der ersten Ausnehmung 28A ansammelt, kann durch den ersten Leckagegaskanal 30A in die Umgebung der Zylinderkopfdichtung (des Verbrennungsmotors) abgeleitet werden. Somit wird die Entstehung eines Überdrucks in der ersten Ausnehmung 28A verhindert, wodurch mögliche Schädigungen verhindert werden können.

Der zweite Leckagegaskanal 38A erstreckt sich zwischen der ersten Ausnehmung 28A und der zweiten Ausnehmung 29A. Leckagegas aus der Verbrennungskammer 20 (siehe Figuren 1 und 2), das sich in der zweiten Ausnehmung 29A ansammelt, kann durch den zweiten Leckagegaskanal 38A, die erste Ausnehmung 28A und den ersten Leckagegaskanal 30A abgeleitet werden.

In anderen Ausführungsformen kann beispielsweise der zweite Leckagegaskanal 38A alternativ oder zusätzlich in den ersten Leckagegaskanal 30A oder einen Entlüftungskanal des Verbrennungsmotors 10 münden, der sich als eine Entlüftungsöffnung (nicht dargestellt) durch die Zylinderkopfdichtung 16 erstrecken kann. Weiterhin sollte beachtet werden, dass insbesondere bei Mehrzylinder-Zylinderkopfdichtungen, wie der in Fig. 3A dargestellten Zylinderkopfdichtung 16, eine Mehrzahl von ersten Leckagegaskanälen 30A, eine Mehrzahl von ersten Ausnehmungen 28A, eine Mehrzahl von zweiten Leckagegaskanäle 38A und/oder eine Mehrzahl von zweiten Ausnehmungen 29A vorgesehen sein können, sodass insbesondere Leckagegas aus Ausnehmungen, die zwischen zwei nebeneinanderliegenden Brennraumöffnungen 24 angeordnet sind, abgeleitet werden kann. Die Mehrzahl von ersten Ausnehmungen 28A und/oder die Mehrzahl von zweiten Ausnehmungen 29A ist daher vorzugsweise zwischen zwei nebeneinanderliegenden Brennraumöffnungen 24 angeordnet.

Es wird zudem darauf hingewiesen, dass beispielsweise die Möglichkeit besteht, dass sich der erste Leckagegaskanal 30A und/oder der zweite Leckagegaskanal 38A zu einer Ausnehmung, die einzig im Zylinderkopf 12 oder Kurbelgehäuse 14 (siehe Figuren 1 und 2) vorgesehen ist, erstreckt. Die Zylinderkopfdichtung 16 ist dann so ausgebildet, dass sich der entsprechende Leckagegaskanal und die entsprechende Ausnehmung im montierten Zustand teilweise überdecken.

Die Zylinderkopfdichtung 16 weist weitere Schraubenlöcher 27 auf. In einigen Ausführungsformen können auch diese Schraubenlöcher 27 mittels eines oder mehrerer Leckagegaskanäle, die beispielsweise in die Außenumfangsfläche 32 münden, entlüftet werden.

Die Zylinderkopfdichtung 16 aus Figur 3A weist zudem ein Durchgangsloch 34 auf, das mit einem Elastomer umgeben ist. Das Durchgangsloch 34 ist von der Brennraumöffnung 24 beabstandet. Das Durchgangsloch 34 verbindet im Einbauzustand einen Kühlkanal im Zylinderkopf 12 und einen Kühlkanal im Kurbelgehäuse 14. Es ist kein Leckagegaskanal vorgesehen, der in das Durchgangsloch 34 mündet, da dies eine Leckage des Kühlmittels zur Folge hätte.

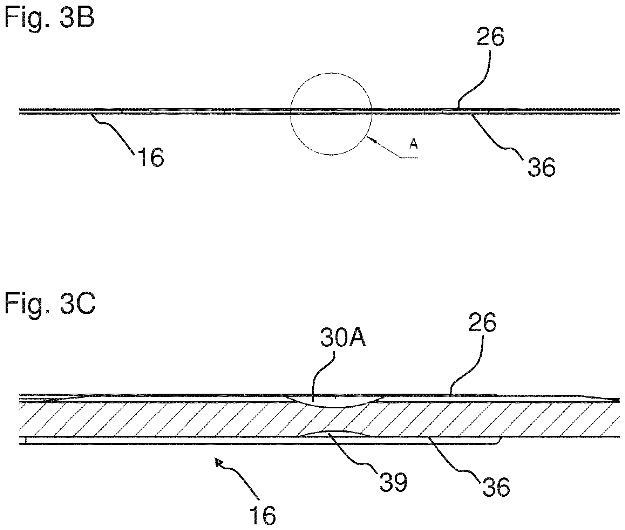

Die Figur 3C zeigt ein Detail aus der Figur 3B, die eine Längsquerschnittsansicht der Zylinderkopfdichtung 16 zeigt. Wie der Figur 3C entnommen werden kann, ist der erste Leckagegaskanal 30A als eine längliche Vertiefung in der ersten Dichtfläche 26 ausgebildet. Die Zylinderkopfdichtung 16 weist entgegengesetzt zu der ersten Dichtfläche 26 die zweite Dichtfläche 36 auf. Alternativ oder zusätzlich kann sich auch in der zweiten Dichtfläche 36 ein Leckagegaskanal 39 zwischen einer Ausnehmung und einem Entlüftungskanal des Verbrennungsmotors 10 (siehe Figur 1) und/oder der Außenumfangsfläche 32A usw. erstrecken.

In der gezeigten Ausführungsform ist die Zylinderkopfdichtung 16 als eine einlagige Zylinderkopfdichtung ausgebildet. In anderen Ausführungsformen kann die Zylinderkopfdichtung 16 mehrlagig sein, wobei vorzugsweise in einer Dichtfläche einer Außenlage oder beider Außenlagen der oder die Leckagegaskanäle als Vertiefungen ausgebildet sind.

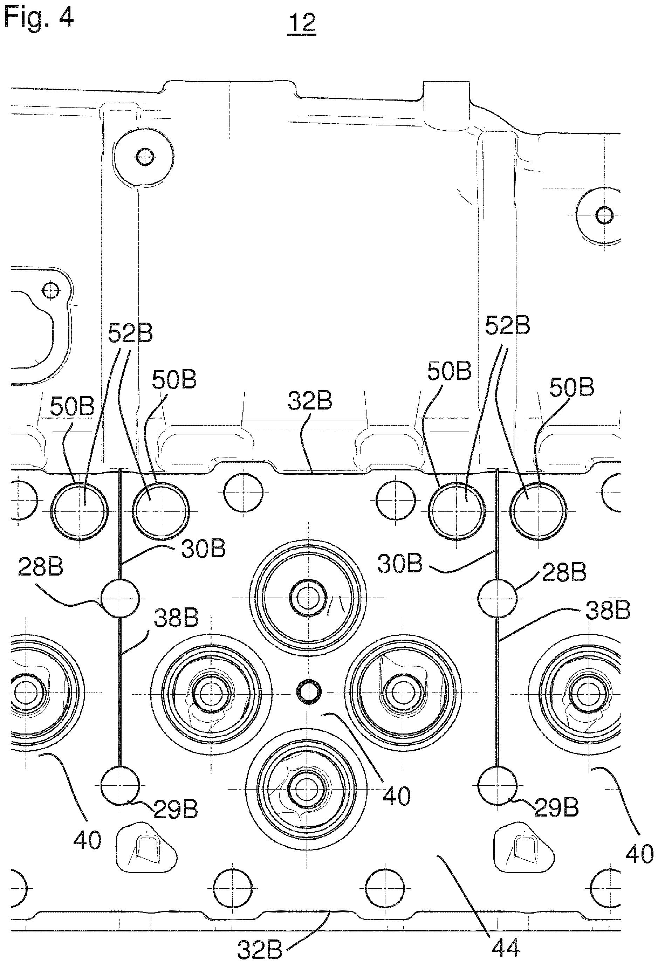

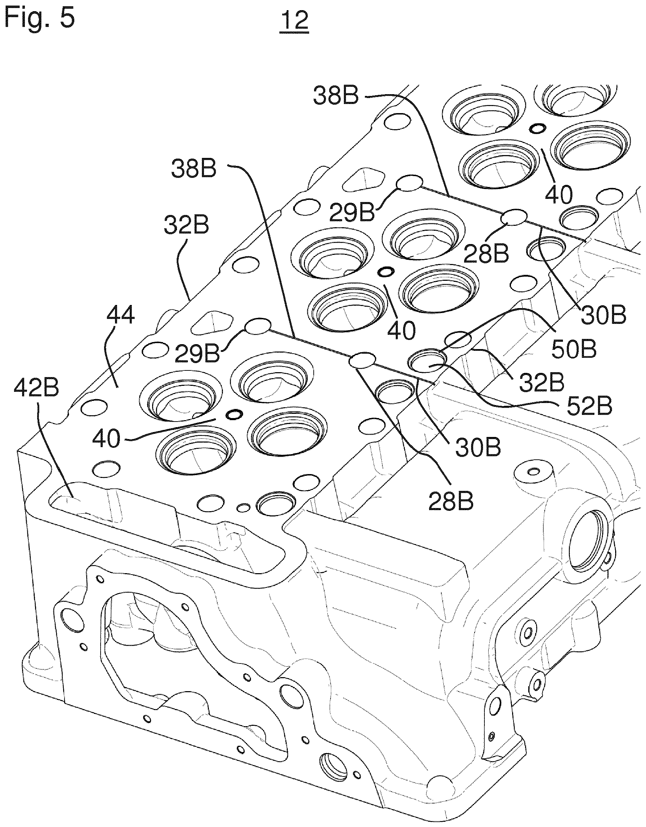

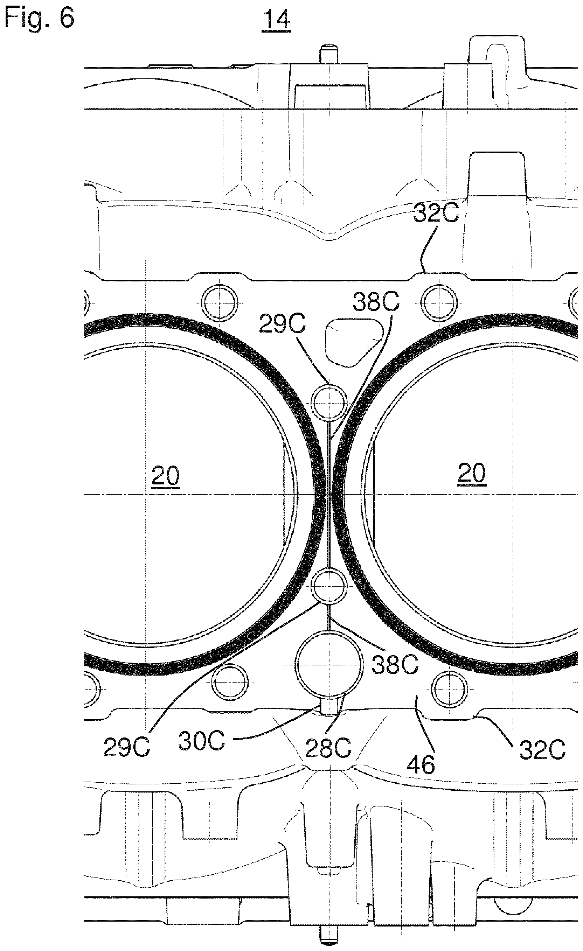

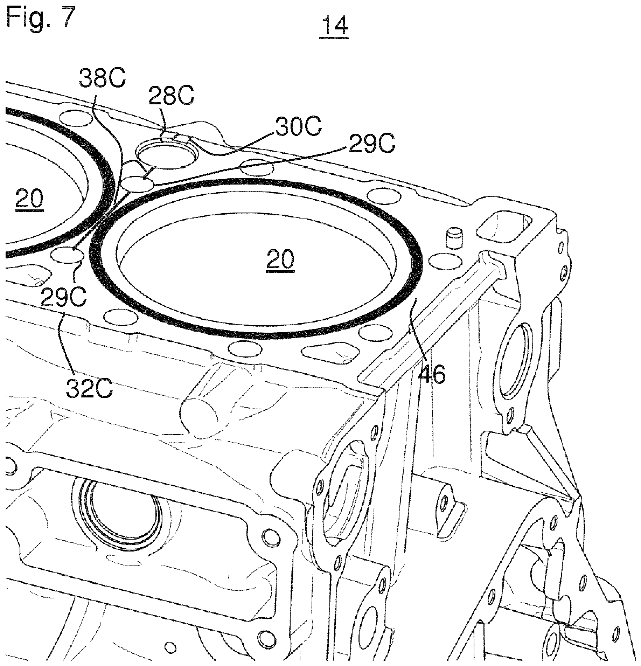

Unter Bezugnahme auf die Figuren 4 und 5 sowie die Figuren 6 und 7 ist nachfolgend erläutert, dass Leckagegaskanäle zusätzlich oder alternativ zur Zylinderkopfdichtung (vgl. Figuren 3A-3C) auch im Zylinderkopf (vgl. Figuren 4 und 5) und/oder im Kurbelgehäuse (vgl. Figuren 6 und 7) vorgesehen werden können.

Die Figuren 4 und 5 zeigen unterschiedliche Bereiche eines Mehrzylinder-Zylinderkopfes 12. Der Zylinderkopf 12 weist die Dichtfläche 44 zur Abdichtung gegen eine Zylinderkopfdichtung auf. Die Dichtfläche 44 umgibt eine Mehrzahl von Brennraumflächen 40, die jeweils als obere Begrenzung der Verbrennungskammern 20 des Verbrennungsmotors 10 (siehe Figur 1) dienen. In die Brennraumflächen 40 münden Einlasskanäle und Auslasskanäle, in die beispielsweise Tellerventile eingesetzt werden können. Kraftstoffinjektoren, Zündvorrichtungen usw. können ebenfalls aus Öffnungen in den Brennraumflächen 40 zumindest teilweise in die Verbrennungskammern 20 reichen. Die Dichtfläche 44 wird durch eine Außenumfangsfläche 32B nach außen begrenzt.

Der Zylinderkopf 12 weist eine Mehrzahl von ersten Leckagegaskanälen 30B auf. Die ersten Leckagegaskanäle 30B verbinden eine Mehrzahl von ersten Ausnehmungen 28B, die als Schraubenlöcher ausgebildet sind, mit der Außenumfangsfläche 32B. Folglich kann Leckagegas, das sich in den Schraubenlöchern 28B befindet, in die Umgebung abgegeben werden. Zusätzlich weist der Zylinderkopf 12 eine Mehrzahl von zweiten Leckagegaskanälen 38B auf. Die zweiten Leckagegaskanäle 38B verbinden eine Mehrzahl von zweiten Ausnehmungen 29B, die ebenfalls als Schraubenlöcher ausgebildet sind, mit der Mehrzahl von ersten Ausnehmungen 28B. Folglich kann Leckagegas aus den zweiten Ausnehmungen 29B in die ersten Ausnehmungen 28B geleitet und von dort über die ersten Leckagegaskanäle 30B in die Umgebung abgegeben werden. Die Ausnehmungen 28B, 29B sind zwischen nebeneinanderliegenden Brennraumflächen 40 angeordnet, da hier besonders kritische Bereiche zur Ansammlung von Leckagegas bestehen. Die Leckagegaskanäle 30B, 38B sind als Vertiefungen in der Dichtfläche 44 ausgebildet.

In anderen Ausführungsformen kann der Zylinderkopf auch als ein Einzylinder-Zylinderkopf ausgebildet sein. Die Leckagegaskanäle können sich ausgehend von weiteren Ausnehmungen in der Dichtfläche 44 erstrecken. Zum Beispiel können sich die Leckagegaskanäle ausgehend von Gusskernlöchern 50B erstrecken. Die Gusskernlöchern 50B sind durch Kernverschlussdeckel 52B verschlossen, sodass eine hinter dem Kernverschlussdeckel 52B befindliche Schmiermittelführung oder Kühlmittelführung nach außen abgedichtet ist. Der oder die Leckagegaskanäle können sich auch zur Abgabe des Leckagegases an die Umgebung zu einem Entlüftungskanal 42B erstrecken, der einen Abschnitt einer Zylinderkopfentlüftung bilden kann.

Die Figuren 6 und 7 zeigen unterschiedliche Bereiche eines Kurbelgehäuses 14 von oben. In der gezeigten Ausführungsform erstreckt sich ein erster Leckagegaskanal 30C zwischen einer ersten Ausnehmung 28C und einer Außenumfangsfläche 32C des Kurbelgehäuses 14. Hier ist die erste Ausnehmung 28C als ein Gusskusskernloch ausgebildet, das von einem Verschlussdeckel verschlossen ist. Weitere Leckagegaskanäle 38C erstrecken sich zwischen den Ausnehmungen 29C und der Ausnehmung 28C. Die Ausnehmungen 29C sind hier als Schraubenlöcher zur Aufnahme der Kopfschrauben 13 (siehe Figur 1) ausgebildet. Die Leckagegaskanäle 30C, 38C sind als Vertiefungen in der Dichtfläche 46 ausgebildet. Die Dichtfläche 46 umgibt die Verbrennungskammern 20. Die Ausnehmungen 28C, 29C sind zwischen nebeneinanderliegenden Verbrennungskammern 20 angeordnet. Das Kurbelgehäuse 16 kann ferner einen Entlüftungskanal einer Kurbelgehäuseentlüftung aufweisen, der zu einer Kurbelkammerentlüftung führt. Vorhandene Leckagegaskanäle können zusätzlich oder alternativ in den Entlüftungskanal münden.

Ein Fachmann wird erkennen, dass die Konfiguration und Anordnung der Ausnehmungen und Leckagegaskanäle in den oben beschriebenen Ausführungsformen der Zylinderkopfdichtung, des Zylinderkopfes und des Kurbelgehäuses analog sein kann. Mit anderen Worten gesagt, können sämtliche Merkmale, die einen Bezug zu den Ausnehmungen und Leckagegaskanälen aufweisen und bezüglich der Zylinderkopfdichtung, des Zylinderkopfes oder des Kurbelgehäuses hierin beschrieben sind, gleichermaßen an den jeweils anderen Komponenten vorgesehen werden.

Wie obenstehend erläutert wurde, ermöglichen die Leckagegaskanäle 30A, 30B, 30C, 38A, 38B, 38C die Ausführung eines Verfahrens zum Abführen von Leckagegas aus mindestens einer Verbrennungskammer 20. Hierbei weist das Verfahren das Sammeln des Leckagegases in mindestens einer innerhalb des Dichtbereichs 18 gebildeten Ausnehmung 28A, 28B, 28C, 29A, 29B, 29C auf, insbesondere einem Schraubenloch oder einem Gusskernloch. Durch die Leckagegaskanäle 30A, 30B, 30C, 38A, 38B, 38C kann dann das angesammelte Leckagegas aus der mindestens einen Ausnehmung 28A, 28B, 28C, 29A, 29B, 29C in eine Umgebung des Verbrennungsmotors 10 und/oder in eine Entlüftung des Verbrennungsmotors 10 geführt abgeleitet werden.

Die Erfindung ist nicht auf die vorstehend beschriebenen bevorzugten Ausführungsbeispiele beschränkt.

### Bezugszeichenliste

- 10: Verbrennungsmotor
- 12: Zylinderkopf
- 13: Kopfschraube
- 14: Kurbelgehäuse
- 16: Zylinderkopfdichtung
- 18: Dichtbereich
- 20: Verbrennungskammer
- 22: Zylinderlaufbuchse
- 24: Brennraumöffnung
- 26: Dichtfläche (Zylinderkopfdichtung)
- 28A: Ausnehmung (Zylinderkopfdichtung)
- 28B: Ausnehmung (Zylinderkopf)
- 28C: Ausnehmung (Kurbelgehäuse)
- 29A: Ausnehmung (Zylinderkopfdichtung)
- 29B: Ausnehmung (Zylinderkopf)
- 29C: Ausnehmung (Kurbelgehäuse)
- 30A: Leckagegaskanal (Zylinderkopfdichtung)
- 30B: Leckagegaskanal (Zylinderkopf)
- 30C: Leckagegaskanal (Kurbelgehäuse)
- 32A: Außenumfangsfläche (Zylinderkopfdichtung)
- 32B: Außenumfangsfläche (Zylinderkopf)
- 32C: Außenumfangsfläche (Kurbelgehäuse)
- 34: Durchgangsloch
- 36: Dichtfläche (Zylinderkopfdichtung)
- 38A: Leckagegaskanal (Zylinderkopfdichtung)
- 38B: Leckagegaskanal (Zylinderkopf)
- 38C: Leckagegaskanal (Kurbelgehäuse)
- 39: Leckagegaskanal (Zylinderkopfdichtung)
- 40: Brennraumfläche
- 42B: Entlüftungskanal
- 44: Dichtfläche (Zylinderkopfdichtung)
- 46: Dichtfläche (Kurbelgehäuse)
- 50B: Gusskernloch
- 52B: Verschlussdeckel

## Patentansprüche

1. Verbrennungsmotor (10) für ein Kraftfahrzeug, insbesondere ein Nutzfahrzeug, aufweisend:
- einen Zylinderkopf (12), insbesondere einen Einzylinder-Zylinderkopf oder einen Mehrzylinder-Zylinderkopf;
- ein Kurbelgehäuse (14);
- eine Zylinderkopfdichtung (16), insbesondere eine Einzylinder-Zylinderkopfdichtung oder eine Mehrzylinder-Zylinderkopfdichtung, die zwischen dem Zylinderkopf (12) und dem Kurbelgehäuse (14) angeordnet ist, wobei der Zylinderkopf (12), die Zylinderkopfdichtung (16) und das Kurbelgehäuse (14) einen Dichtbereich (18) zum Abdichten mindestens einer Verbrennungskammer (20) des Verbrennungsmotors (10) bilden;
- eine erste Ausnehmung (28A; 28B; 28C), die innerhalb des Dichtbereichs (18) und beabstandet zu der mindestens einen Verbrennungskammer (20) angeordnet ist, wobei die erste Ausnehmung (28A; 28B; 28C) insbesondere ein Schraubenloch oder ein verschlossenes Gusskernloch ist; und
- einen ersten Leckagegaskanal (30A; 30B; 30C), der sich von der ersten Ausnehmung (28A; 28B; 28C) zu einer ersten, zur Umgebung des Verbrennungsmotors (10) freiliegenden Fläche (32A; 32B; 32C) und/oder zu einem Entlüftungskanal (42B) des Verbrennungsmotors (10) erstreckt, wobei der erste Leckagegaskanal (30A; 30B; 30C) insbesondere als eine Vertiefung ausgebildet ist;
wobei:
- die erste Ausnehmung (28A) in einer Dichtfläche (26; 36) der Zylinderkopfdichtung (16) vorgesehen ist und ein Schraubenloch ist, und der erste Leckagegaskanal (30A) in einer Dichtfläche (26, 36) der Zylinderkopfdichtung (16) vorgesehen ist; oder
- die erste Ausnehmung (28C) in einer Dichtfläche (46) des Kurbelgehäuses (14) vorgesehen ist und ein Schraubenloch oder ein verschlossenes Gusskernloch ist, und der erste Leckagegaskanal (30C) in einer Dichtfläche (46) des Kurbelgehäuses (14) vorgesehen ist und sich zu der ersten, zur Umgebung des Verbrennungsmotors (10) freiliegenden Fläche (32C) erstreckt; oder
- der erste Leckagegaskanal (30A; 30B; 30C) in einer Dichtfläche (44) des Zylinderkopfes (12) vorgesehen ist und sich von der ersten Ausnehmung (28A; 28B; 28C) zu dem Entlüftungskanal (42B) des Verbrennungsmotors (10) erstreckt.

2. Verbrennungsmotor (10) nach Anspruch 1, ferner aufweisend:
- eine zweite Ausnehmung (29A; 29B; 29C), die innerhalb des Dichtbereichs (18) und beabstandet zu der mindestens einen Verbrennungskammer (20) angeordnet ist, wobei die zweite Ausnehmung (29A; 29B; 29C) insbesondere ein Schraubenloch oder ein verschlossenes Gusskernloch ist; und
- einen zweiten Leckagegaskanal (38A; 38B; 38C), der sich von der zweiten Ausnehmung (29A; 29B; 29C) zu der ersten, zur Umgebung des Verbrennungsmotors (10) freiliegenden Fläche (32A; 32B; 32C), einer zweiten, zur Umgebung des Verbrennungsmotors (10) freiliegenden Fläche (32A; 32B; 32C), der ersten Ausnehmung (28A; 28B; 28C), dem ersten Leckagegaskanal (30A; 30B; 30C) und/oder dem Entlüftungskanal (42B) erstreckt, wobei der zweite Leckagegaskanal (38A; 38B; 38C) insbesondere als eine Vertiefung ausgebildet ist.

3. Verbrennungsmotor (10) nach Anspruch 2, wobei:
die zweite Ausnehmung (29A; 29B; 29C) in einer Dichtfläche (44) des Zylinderkopfes (12), in einer Dichtfläche (46) des Kurbelgehäuses (14) und/oder in einer Dichtfläche (26; 36) der Zylinderkopfdichtung (16) vorgesehen ist; und/oder
der zweite Leckagegaskanal (38A; 38B; 38C) in einer Dichtfläche (44) des Zylinderkopfes (12), in einer Dichtfläche (46) des Kurbelgehäuses (14) und/oder in einer Dichtfläche (26, 36) der Zylinderkopfdichtung (16) vorgesehen ist, wobei der erste Leckagegaskanal (30A; 30B; 30C) und/oder der zweite Leckagegaskanal (38A; 38B; 38C) insbesondere als eine Nut, eine Rille oder ein Schlitz ausgebildet ist.

4. Verbrennungsmotor (10) nach einem der vorherigen Ansprüche, wobei:
die erste zur Umgebung des Verbrennungsmotors (10) freiliegende Fläche eine Außenumfangsfläche (32A) des Zylinderkopfes (12), eine Außenumfangsfläche des Kurbelgehäuses (14) und/oder eine Außenumfangsfläche der Zylinderkopfdichtung (16) ist; und/oder
der Entlüftungskanal (42B) einen Abschnitt einer Zylinderkopfentlüftung und/oder einen Abschnitt einer Kurbelkammerentlüftung bildet.

5. Verbrennungsmotor (10) nach einem der vorherigen Ansprüche, wobei die mindestens eine Verbrennungskammer (20) zwei nebeneinanderliegende Verbrennungskammern (20) aufweist, und die erste Ausnehmung (28A; 28B; 28C) zwischen den nebeneinanderliegenden Verbrennungskammern (20) angeordnet sind.

6. Verbrennungsmotor (10) nach einem der vorherigen Ansprüche, wobei:
der erste Leckagegaskanal (30A; 30B; 30C) durch ein Umformverfahren, insbesondere ein Druckumformverfahren, vorzugsweise durch Einprägen, ausgebildet ist; und/oder der erste Leckagegaskanal (30A; 30B; 30C) durch ein Zerspannungsverfahren, insbesondere ein Fräsverfahren, ausgebildet ist.

7. Zylinderkopfdichtung (16), insbesondere Einzylinder-Zylinderkopfdichtung oder Mehrzylinder-Zylinderkopfdichtung, für einen Verbrennungsmotor (10), aufweisend:
- mindestens eine Brennraumöffnung (24);
- eine Außenumfangsfläche (32A);
- eine erste Dichtfläche (26) zur Abdichtung gegen ein Kurbelgehäuse (16) oder einen Zylinderkopf (14);
- eine erste Ausnehmung (28A), die innerhalb der ersten Dichtfläche (26) beabstandet zu der mindestens einen Brennraumöffnung (24) angeordnet ist, wobei die erste Ausnehmung (28A) ein Schraubenloch ist; und
- einen ersten Leckagegaskanal (30A), der sich von der ersten Ausnehmung (28A) bis zu der Außenumfangsfläche (32A) und/oder einer Entlüftungsöffnung der Zylinderkopfdichtung (16) erstreckt, wobei der erste Leckagegaskanal (30A) insbesondere als eine Vertiefung, die sich in der ersten Dichtfläche (26) erstreckt, ausgebildet ist.

8. Zylinderkopfdichtung (16) nach Anspruch 7, ferner aufweisend:
- eine zweite Ausnehmung (29A), die innerhalb der ersten Dichtfläche (26) und/oder einer zweiten Dichtfläche (36), die zu der ersten Dichtfläche (26) entgegengesetzt ist, beabstandet zu der Brennraumöffnung (24) angeordnet ist, wobei die zweite Ausnehmung (29A) insbesondere ein Durchgangsloch, vorzugsweise ein Schraubenloch, ist; und
- einen zweiten Leckagegaskanal (38A), der sich von der zweiten Ausnehmung (29A) zu der Außenumfangsfläche (32A), der ersten Ausnehmung (28A), dem ersten Leckagegaskanal (30A) und/oder einer Entlüftungsöffnung der Zylinderkopfdichtung (16) erstreckt, wobei der zweite Leckagegaskanal (38A) insbesondere als eine Vertiefung, die sich in der ersten Dichtfläche (26) oder der zweiten Dichtfläche (36) erstreckt, ausgebildet ist.

9. Zylinderkopfdichtung (16) nach Anspruch 7 oder Anspruch 8, wobei die mindestens eine Brennraumöffnung (24) zwei nebeneinanderliegende Brennraumöffnungen aufweist, und die erste Ausnehmung (28A) und/oder die zweite Ausnehmung (29A) zwischen den zwei nebeneinanderliegenden Brennraumöffnungen (20) angeordnet ist.

10. Zylinderkopfdichtung (16) nach einem der Ansprüche 7 bis 9, wobei:
die Zylinderkopfdichtung (16) eine einlagige Zylinderkopfdichtung ist, oder
die Zylinderkopfdichtung (16) eine mehrlagige Zylinderkopfdichtung ist und der erste Leckagegaskanal (30A) und/oder der zweite Leckagegaskanal (38A) sich vorzugsweise in einer Außenlage der mehrlagigen Zylinderkopfdichtung erstreckt.

11. Zylinderkopf (12), insbesondere Einzylinder-Zylinderkopf oder Mehrzylinder-Zylinderkopf, für einen Verbrennungsmotor (10), aufweisend:
- mindestens eine Brennraumfläche (40) zum Begrenzen mindestens einer Verbrennungskammer (20);
- eine Außenumfangsfläche (32B);
- eine Dichtfläche (44) zum Abdichten gegen eine Zylinderkopfdichtung (16);
- eine erste Ausnehmung (28B), die innerhalb der Dichtfläche (44) beabstandet zu der mindestens einen Brennraumfläche (40) angeordnet ist, wobei die erste Ausnehmung (28B) insbesondere ein Schraubenloch oder ein verschlossenes Gusskernloch ist; und
- einen ersten Leckagegaskanal (30B), der sich von der ersten Ausnehmung (28B) bis zu einem Entlüftungskanal (42B) des Zylinderkopfes (12) erstreckt, wobei der erste Leckagegaskanal (30B) insbesondere als eine Vertiefung, die sich in der Dichtfläche (44) erstreckt, ausgebildet ist.

12. Zylinderkopf (12) nach Anspruch 11, wobei:
die mindestens eine Brennraumfläche (40) zwei nebeneinanderliegende Brennraumflächen für zwei nebeneinanderliegende Verbrennungskammern (20) aufweist, und die erste Ausnehmung (28B) und/oder eine zweite Ausnehmung (29B) zwischen den zwei nebeneinanderliegende Brennraumflächen (40) angeordnet ist; und/oder
eine zweite Ausnehmung (29B) innerhalb der Dichtfläche (44) beabstandet zu der mindestens einen Brennraumfläche (40) angeordnet und insbesondere ein Schraubenloch oder ein verschlossenes Gusskernloch ist, und ein zweiter Leckagegaskanal (38B) vorgesehen ist, der sich von der zweiten Ausnehmung (29B) zu der Außenumfangsfläche (32B), der ersten Ausnehmung (28B) dem ersten Leckagegaskanal (30B) und/oder dem Entlüftungskanal (42B) erstreckt, wobei der zweite Leckagegaskanal (38B) sich insbesondere als eine Vertiefung, die sich in der Dichtfläche (44) erstreckt, ausgebildet ist.

13. Kurbelgehäuse (14) für einen Verbrennungsmotor (10), aufweisend:
- mindestens eine Verbrennungskammer (20);
- eine Außenumfangsfläche (32C);
- eine Dichtfläche (46) zum Abdichten gegen eine Zylinderkopfdichtung (16);
- eine erste Ausnehmung (28C), die innerhalb der Dichtfläche (46) beabstandet zu der mindestens einen Verbrennungskammer (20) angeordnet ist, wobei die erste Ausnehmung (28C) ein Schraubenloch oder ein verschlossenes Gusskernloch ist; und
- einen ersten Leckagegaskanal (30C), der sich von der ersten Ausnehmung (28C) bis zu der Außenumfangsfläche (32C) des Kurbelgehäuses (14) erstreckt, wobei der erste Leckagegaskanal (30C) insbesondere als eine Vertiefung, die sich in der Dichtfläche (46) erstreckt, ausgebildet ist.

14. Kraftfahrzeug, insbesondere Nutzfahrzeug, aufweisend einen Verbrennungsmotor (10) nach einem der Ansprüche 1 bis 6, eine Zylinderkopfdichtung (16) nach einem der Ansprüche 7 bis 10, einen Zylinderkopf (12) nach Anspruch 11 oder Anspruch 12, oder ein Kurbelgehäuse (14) nach Anspruch 13.

15. Verfahren zum Abführen von aus einer Verbrennungskammer (20) eines Verbrennungsmotors (10) stammendem Leckagegas, insbesondere Schleichgas, aus einem Dichtbereich (18) zwischen einem Zylinderkopf (12), einer Zylinderkopfdichtung (16) und einem Kurbelgehäuse (14) des Verbrennungsmotors (10) zum Abdichten der Verbrennungskammer (20), aufweisend:
- Sammeln des Leckagegases in mindestens einer innerhalb des Dichtbereichs (18) gebildeten Ausnehmung (28A; 28B; 28C; 29A; 29B; 29C), insbesondere einem Schraubenloch oder einem Gusskernloch, die zu der Verbrennungskammer (20) des Verbrennungsmotors (10) beabstandet ist; und
- geführtes Ableiten des Leckagegases aus der mindestens einen Ausnehmung (28A; 28B; 28C; 29A; 29B; 29C) außerhalb des Dichtbereichs (18) in eine Umgebung des Verbrennungsmotors (10) und/oder in eine Entlüftung des Verbrennungsmotors (10), insbesondere eine Kurbelgehäuseentlüftung und/oder eine Zylinderkopfentlüftung,
wobei:
- die erste Ausnehmung (28A; 28B; 28C) in einer Dichtfläche (26; 36) der Zylinderkopfdichtung (16) vorgesehen ist und ein Schraubenloch ist, und der erste Leckagegaskanal (30A) in einer Dichtfläche (26, 36) der Zylinderkopfdichtung (16) vorgesehen ist; oder
- die erste Ausnehmung (28A; 28B; 28C) in einer Dichtfläche (46) des Kurbelgehäuses (14) vorgesehen ist und ein Schraubenloch oder ein verschlossenes Gusskernloch ist, und der erste Leckagegaskanal (30C) in einer Dichtfläche (46) des Kurbelgehäuses (14) vorgesehen ist und sich zu der ersten, zur Umgebung des Verbrennungsmotors (10) freiliegenden Fläche (32C) erstreckt; oder
- der erste Leckagegaskanal (30A; 30B; 30C) in einer Dichtfläche (44) des Zylinderkopfes (12) vorgesehen ist und sich von der ersten Ausnehmung (28A; 28B; 28C) zu dem Entlüftungskanal (42B) des Verbrennungsmotors (10) erstreckt.

## Claims

1. An internal combustion engine (10) for a motor vehicle, in particular a commercial vehicle, having:
- a cylinder head (12), in particular a single-cylinder cylinder head or a multi-cylinder cylinder head;
- a crankcase (14);
- a cylinder head gasket (16), in particular a single-cylinder cylinder head gasket or a multi-cylinder cylinder head gasket, which is arranged between the cylinder head (12) and the crankcase (14), wherein the cylinder head (12), the cylinder head gasket (16) and the crankcase (14) form a sealing region (18) for sealing at least one combustion chamber (20) of the internal combustion engine (10);
- a first recess (28A; 28B; 28C), which is arranged within the sealing region (18) and at a distance from the at least one combustion chamber (20), wherein the first recess (28A; 28B; 28C) is, in particular, a screw hole or a closed casting core hole; and
- a first leakage gas passage (30A; 30B; 30C), which extends from the first recess (28A; 28B; 28C) to a first surface (32A; 32B; 32C) exposed to the environment of the internal combustion engine (10) and/or to a ventilation passage (42B) of the internal combustion engine (10), wherein the first leakage gas passage (30A; 30B; 30C) is designed, in particular, as a depression;
wherein:
- the first recess (28A) is provided in a sealing surface (26; 36) of the cylinder head gasket (16) and is a screw hole, and the first leakage gas passage (30A) is provided in a sealing surface (26, 36) of the cylinder head gasket (16); or
- the first recess (28C) is provided in a sealing surface (46) of the crankcase (14) and is a screw hole or a closed casting core hole, and the first leakage gas passage (30C) is provided in a sealing surface (46) of the crankcase (14) and extends to the first surface (32C) exposed to the environment of the internal combustion engine (10); or
- the first leakage gas passage (30A; 30B; 30C) is provided in a sealing surface (44) of the cylinder head (12) and extends from the first recess (28A; 28B; 28C) to the ventilation passage (42B) of the internal combustion engine (10).

2. The internal combustion engine (10) according to Claim 1, furthermore having:
- a second recess (29A; 29B; 29C), which is arranged within the sealing region (18) and at a distance from the at least one combustion chamber (20), wherein the second recess (29A; 29B; 29C) is, in particular, a screw hole or a closed casting core hole; and
- a second leakage gas passage (38A; 38B; 38C), which extends from the second recess (29A; 29B; 29C) to the first surface (32A; 32B; 32C) exposed to the environment of the internal combustion engine (10), to a second surface (32A; 32B; 32C) exposed to the environment of the internal combustion engine (10), to the first recess (28A; 28B; 28C), to the first leakage gas passage (30A; 30B; 30C) and/or to the ventilation passage (42B), wherein the second leakage gas passage (38A; 38B; 38C) is designed, in particular, as a depression.

3. The internal combustion engine (10) according to Claim 2, wherein:
the second recess (29A; 29B; 29C) is provided in a sealing surface (44) of the cylinder head (12), in a sealing surface (46) of the crankcase (14) and/or in a sealing surface (26; 36) of the cylinder head gasket (16); and/or the second leakage gas passage (38A; 38B; 38C) is provided in a sealing surface (44) of the cylinder head (12), in a sealing surface (46) of the crankcase (14) and/or in a sealing surface (26, 36) of the cylinder head gasket (16), wherein the first leakage gas passage (30A; 30B; 30C) and/or the second leakage gas passage (38A; 38B; 38C) is/are designed, in particular, as a groove, a channel or a slot.

4. The internal combustion engine (10) according to one of the preceding claims, wherein:
the first surface exposed to the environment of the internal combustion engine (10) is an outer peripheral surface (32A) of the cylinder head (12), an outer peripheral surface of the crankcase (14) and/or an outer peripheral surface of the cylinder head gasket (16); and/or
the ventilation passage (42B) forms a section of a cylinder head ventilation system and/or a section of a crank chamber ventilation system.

5. The internal combustion engine (10) according to one of the preceding claims, wherein the at least one combustion chamber (20) has two adjacent combustion chambers (20), and the first recess (28A; 28B; 28C) are arranged between the adjacent combustion chambers (20).

6. The internal combustion engine (10) according to one of the preceding claims, wherein:
the first leakage gas passage (30A; 30B; 30C) is formed by a forming method, in particular a compressive forming method, preferably by stamping; and/or
the first leakage gas passage (30A; 30B; 30C) is formed by a machining method, in particular a milling method.

7. A cylinder head gasket (16), in particular a single-cylinder cylinder head gasket or multi-cylinder cylinder head gasket, for an internal combustion engine (10), having:
- at least one combustion chamber opening (24);
- an outer peripheral surface (32A);
- a first sealing surface (26) for sealing with respect to a crankcase (16) or a cylinder head (14);
- a first recess (28A), which is arranged within the first sealing surface (26) at a distance from the at least one combustion chamber opening (24), wherein the first recess (28A) is a screw hole; and
- a first leakage gas passage (30A), which extends from the first recess (28A) to the outer peripheral surface (32A) and/or to a ventilation opening of the cylinder head gasket (16), wherein the first leakage gas passage (30A) is designed, in particular, as a depression which extends in the first sealing surface (26).

8. The cylinder head gasket (16) according to Claim 7, furthermore having:
- a second recess (29A), which is arranged within the first sealing surface (26) and/or a second sealing surface (36), which is opposite the first sealing surface (26), at a distance from the combustion chamber opening (24), wherein the second recess (29A) is, in particular, a through hole, preferably a screw hole; and
- a second leakage gas passage (38A), which extends from the second recess (29A) to the outer peripheral surface (32A), to the first recess (28A), to the first leakage gas passage (30A) and/or to a ventilation opening of the cylinder head gasket (16), wherein the second leakage gas passage (38A) is designed, in particular, as a depression which extends in the first sealing surface (26) or the second sealing surface (36).

9. The cylinder head gasket (16) according to Claim 7 or Claim 8, wherein the at least one combustion chamber opening (24) has two adjacent combustion chamber openings, and the first recess (28A) and/or the second recess (29A) is/are arranged between the two adjacent combustion chamber openings (20).

10. The cylinder head gasket (16) according to one of Claims 7 to 9, wherein:
the cylinder head gasket (16) is a single-ply cylinder head gasket, or
the cylinder head gasket (16) is a multi-ply cylinder head gasket and the first leakage gas passage (30A) and/or the second leakage gas passage (38A) preferably extends/extend in an outer ply of the multi-ply cylinder head gasket.

11. A cylinder head (12), in particular a single-cylinder cylinder head or multi-cylinder cylinder head for an internal combustion engine (10), having:
- at least one combustion chamber surface (40) for delimiting at least one combustion chamber (20);
- an outer peripheral surface (32B);
- a sealing surface (44) for sealing with respect to a cylinder head gasket (16);
- a first recess (28B), which is arranged within the sealing surface (44) at a distance from the at least one combustion chamber surface (40), wherein the first recess (28B) is, in particular, a screw hole or a closed casting core hole; and
- a first leakage gas passage (30B), which extends from the first recess (28B) to a ventilation passage (42B) of the cylinder head (12), wherein the first leakage gas passage (30B) is designed, in particular, as a depression which extends in the sealing surface (44).

12. The cylinder head (12) according to Claim 11, wherein:
the at least one combustion chamber surface (40) has two adjacent combustion chamber surfaces for two adjacent combustion chambers (20), and the first recess (28B) and/or a second recess (29B) is/are arranged between the two adjacent combustion chamber surfaces (40); and/or
a second recess (29B) is arranged within the sealing surface (44) at a distance from the at least one combustion chamber surface (40) and is, in particular, a screw hole or a closed casting core hole, and a second leakage gas passage (38B) is provided, which extends from the second recess (29B) to the outer peripheral surface (32B), to the first recess (28B), to the first leakage gas passage (30B) and/or to the ventilation passage (42B), wherein the second leakage gas passage (38B) is designed, in particular, as a depression which extends in the sealing surface (44).

13. A crankcase (14) for an internal combustion engine (10), having:
- at least one combustion chamber (20);
- an outer peripheral surface (32C);
- a sealing surface (46) for sealing with respect to a cylinder head gasket (16);
- a first recess (28C), which is arranged within the sealing surface (46) at a distance from the at least one combustion chamber (20), wherein the first recess (28C) is, in particular, a screw hole or a closed casting core hole; and
- a first leakage gas passage (30C), which extends from the first recess (28C) to the outer peripheral surface (32C) of the crankcase (14), wherein the first leakage gas passage (30C) is designed, in particular, as a depression which extends in the sealing surface (46).

14. A motor vehicle, in particular a commercial vehicle, having a combustion engine (10) according to one of Claims 1 to 6, a cylinder head gasket (16) according to one of Claims 7 to 10, a cylinder head (12) according to Claim 11 or Claim 12, or a crankcase (14) according to Claim 13.

15. A method for discharging leakage gas, in particular creeping gas, coming from a combustion chamber (20) of an internal combustion engine (10) from a sealing region (18) between a cylinder head (12), a cylinder head gasket (16) and a crankcase (14) of the internal combustion engine (10) for sealing the combustion chamber (20), comprising:
- collecting the leakage gas in at least one recess (28A; 28B; 28C; 29A; 29B; 29C) formed within the sealing region (18), in particular a screw hole or a casting core hole, which is at a distance from the combustion chamber (20) of the internal combustion engine (10); and
- guided discharge of the leakage gas out of the at least one recess (28A; 28B; 28C; 29A; 29B; 29C) outside the sealing region (18) into an environment of the internal combustion engine (10) and/or into a ventilation system of the internal combustion engine (10), in particular a crankcase ventilation system and/or a cylinder head ventilation system,
wherein:
- the first recess (28A; 28B; 28C) is provided in a sealing surface (26; 36) of the cylinder head gasket (16) and is a screw hole, and the first leakage gas passage (30A) is provided in a sealing surface (26, 36) of the cylinder head gasket (16); or
- the first recess (28A; 28B; 28C) is provided in a sealing surface (46) of the crankcase (14) and is a screw hole or a closed casting core hole, and the first leakage gas passage (30C) is provided in a sealing surface (46) of the crankcase (14) and extends to the first surface (32C) exposed to the environment of the internal combustion engine (10); or
- the first leakage gas passage (30A; 30B; 30C) is provided in a sealing surface (44) of the cylinder head (12) and extends from the first recess (28A; 28B; 28C) to the ventilation passage (42B) of the internal combustion engine (10).

## Revendications

1. Moteur à combustion interne (10) pour un véhicule automobile, en particulier un véhicule utilitaire, comprenant :
- une culasse (12), en particulier une culasse monocylindre ou une culasse multicylindres ;
- un carter de vilebrequin (14) ;
- un joint de culasse (16), en particulier un joint de culasse monocylindre ou un joint de culasse multicylindres, qui est disposé entre la culasse (12) et le carter de vilebrequin (14), la culasse (12), le joint de culasse (16) et le carter de vilebrequin (14) formant une région d'étanchéité (18) servant à réaliser l'étanchéité d'au moins une chambre de combustion (20) du moteur à combustion interne (10) ;
- un premier évidement (28A ; 28B ; 28C), qui est disposé à l'intérieur de la région d'étanchéité (18) et de manière espacée de l'au moins une chambre de combustion (20), le premier évidement (28A ; 28B ; 28C) étant en particulier un trou taraudé ou un trou de noyau de coulée fermé ; et
- un premier canal de gaz de fuite (30A ; 30B ; 30C), qui s'étend à partir du premier évidement (28A ; 28B ; 28C) jusqu'à une première surface (32A ; 32B ; 32C) exposée à l'environnement du moteur à combustion interne (10) et/ou jusqu'à un canal de ventilation (42B) du moteur à combustion interne (10), le premier canal de gaz de fuite (30A ; 30B ; 30C) étant réalisé en particulier sous la forme d'un renfoncement ;
- le premier évidement (28A) étant prévu dans une surface d'étanchéité (26 ; 36) du joint de culasse (16) et étant un trou taraudé, et le premier canal de gaz de fuite (30A) étant prévu dans une surface d'étanchéité (26, 36) du joint de culasse (16) ; ou
- le premier évidement (28C) étant prévu dans une surface d'étanchéité (46) du carter de vilebrequin (14) et étant un trou taraudé ou un trou de noyau de coulée fermé, et le premier canal de gaz de fuite (30C) étant prévu dans une surface d'étanchéité (46) du carter de vilebrequin (14) et s'étendant jusqu'à la première surface (32C) exposée à l'environnement du moteur à combustion interne (10) ; ou
- le premier canal de gaz de fuite (30A ; 30B ; 30C) étant prévu dans une surface d'étanchéité (44) de la culasse (12) et s'étendant à partir du premier évidement (28A ; 28B ; 28C) jusqu'au canal de ventilation (42B) du moteur à combustion interne (10).

2. Moteur à combustion interne (10) selon la revendication 1, comprenant en outre :
- un deuxième évidement (29A ; 29B ; 29C), qui est disposé à l'intérieur de la région d'étanchéité (18) et de manière espacée de l'au moins une chambre de combustion (20), le deuxième évidement (29A ; 29B ; 29C) étant en particulier un trou taraudé ou un trou de noyau de coulée fermé ; et
- un deuxième canal de gaz de fuite (38A ; 38B ; 38C), qui s'étend à partir du deuxième évidement (29A ; 29B ; 29C) jusqu'à la première surface (32A ; 32B ; 32C) exposée à l'environnement du moteur à combustion interne (10), jusqu'à une deuxième surface (32A ; 32B ; 32C) exposée à l'environnement du moteur à combustion interne (10), jusqu'au premier évidement (28A ; 28B ; 28C), jusqu'au premier canal de gaz de fuite (30A ; 30B ; 30C) et/ou jusqu'au canal de ventilation (42B), le deuxième canal de gaz de fuite (38A ; 38B ; 38C) étant réalisé en particulier sous la forme d'un renfoncement.

3. Moteur à combustion interne (10) selon la revendication 2,
le deuxième évidement (29A ; 29B ; 29C) étant prévu dans une surface d'étanchéité (44) de la culasse (12), dans une surface d'étanchéité (46) du carter de vilebrequin (14) et/ou dans une surface d'étanchéité (26 ; 36) du joint de culasse (16) ; et/ou
le deuxième canal de gaz de fuite (38A ; 38B ; 38C) étant prévu dans une surface d'étanchéité (44) de la culasse (12), dans une surface d'étanchéité (46) du carter de vilebrequin (14) et/ou dans une surface d'étanchéité (26, 36) du joint de culasse (16), le premier canal de gaz de fuite (30A ; 30B ; 30C) et/ou le deuxième canal de gaz de fuite (38A ; 38B ; 38C) étant réalisés en particulier sous la forme d'une rainure, d'une gorge ou d'une fente.

4. Moteur à combustion interne (10) selon l'une des revendications précédentes,
la première surface exposée à l'environnement du moteur à combustion interne (10) étant une surface périphérique extérieure (32A) de la culasse (12), une surface périphérique extérieure du carter de vilebrequin (14) et/ou une surface périphérique extérieure du joint de culasse (16) ; et/ou
le canal de ventilation (42B) formant une partie d'un système de ventilation de culasse et/ou une partie d'un système de ventilation de chambre de vilebrequin.

5. Moteur à combustion interne (10) selon l'une des revendications précédentes, l'au moins une chambre de combustion (20) comprenant deux chambres de combustion (20) juxtaposées, et le premier évidement (28A ; 28B ; 28C) sont disposé entre les chambres de combustion (20) juxtaposées.

6. Moteur à combustion interne (10) selon l'une des revendications précédentes,
le premier canal de gaz de fuite (30A ; 30B ; 30C) étant réalisé par un procédé de formage, en particulier un procédé de formage sous pression, de préférence par estampage ; et/ou
le premier canal de gaz de fuite (30A ; 30B ; 30C) étant réalisé par un procédé d'enlèvement de copeaux, en particulier un procédé de fraisage.

7. Joint de culasse (16), en particulier joint de culasse monocylindre ou joint de culasse multicylindres, pour un moteur à combustion interne (10), comprenant :
- au moins une ouverture de chambre de combustion (24) ;
- une surface périphérique extérieure (32A) ;
- une première surface d'étanchéité (26) servant à réaliser l'étanchéité vis-à-vis d'un carter de vilebrequin (16) ou d'une culasse (14) ;
- un premier évidement (28A), qui est disposé à l'intérieur de la première surface d'étanchéité (26) de manière espacée de l'au moins une ouverture de chambre de combustion (24), le premier évidement (28A) étant un trou taraudé ; et
- un premier canal de gaz de fuite (30A), qui s'étend à partir du premier évidement (28A) jusqu'à la surface périphérique extérieure (32A) et/ou jusqu'à une ouverture de ventilation du joint de culasse (16), le premier canal de gaz de fuite (30A) étant réalisé en particulier sous la forme d'un renfoncement qui s'étend dans la première surface d'étanchéité (26).

8. Joint de culasse (16) selon la revendication 7, comprenant en outre :
- un deuxième évidement (29A), qui est disposé à l'intérieur de la première surface d'étanchéité (26) et/ou d'une deuxième surface d'étanchéité (36), qui est opposée à la première surface d'étanchéité (26), de manière espacée de l'ouverture de chambre de combustion (24), le deuxième évidement (29A) étant en particulier un trou traversant, de préférence un trou taraudé ; et
- un deuxième canal de gaz de fuite (38A), qui s'étend à partir du deuxième évidement (29A) jusqu'à la surface périphérique extérieure (32A), jusqu'au premier évidement (28A), jusqu'au premier canal de gaz de fuite (30A) et/ou jusqu'à une ouverture de ventilation du joint de culasse (16), le deuxième canal de gaz de fuite (38A) étant réalisé en particulier sous la forme d'un renfoncement qui s'étend dans la première surface d'étanchéité (26) ou la deuxième surface d'étanchéité (36) .

9. Joint de culasse (16) selon la revendication 7 ou la revendication 8, l'au moins une ouverture de chambre de combustion (24) comprenant deux ouvertures de chambre de combustion juxtaposées, et
le premier évidement (28A) et/ou le deuxième évidement (29A) étant disposé(s) entre les deux ouvertures de chambre de combustion (20) juxtaposées.

10. Joint de culasse (16) selon l'une des revendications 7 à 9,
le joint de culasse (16) étant un joint de culasse monocylindre, ou le joint de culasse (16) étant un joint de culasse multicylindres et le premier canal de gaz de fuite (30A) et/ou le deuxième canal de gaz de fuite (38A) s'étendant de préférence dans une couche extérieure du joint de culasse multicouche.

11. Culasse (12), en particulier culasse monocylindre ou culasse multicylindres, pour un moteur à combustion interne (10), comprenant :
- au moins une surface de chambre de combustion (40) servant à délimiter au moins une chambre de combustion (20) ;
- une surface périphérique extérieure (32B) ;
- une surface d'étanchéité (44) servant à réaliser l'étanchéité vis-à-vis d'un joint de culasse (16) ;
- un premier évidement (28B), qui est disposé à l'intérieur de la surface d'étanchéité (44) de manière espacée de l'au moins une surface de chambre de combustion (40), le premier évidement (28B) étant en particulier un trou taraudé ou un trou de noyau de coulée fermé ; et
- un premier canal de gaz de fuite (30B), qui s'étend à partir du premier évidement (28B) jusqu'à un canal de ventilation (42B) de la culasse (12), le premier canal de gaz de fuite (30B) étant réalisé en particulier sous la forme d'un renfoncement qui s'étend dans la surface d'étanchéité (44).

12. Culasse (12) selon la revendication 11,
l'au moins une surface de chambre de combustion (40) comprenant deux surfaces de chambre de combustion juxtaposées pour deux chambres de combustion (20) juxtaposées, et le premier évidement (28B) et/ou un deuxième évidement (29B) étant disposé(s) entre les deux surfaces de chambre de combustion (40) juxtaposées ; et/ou
un deuxième évidement (29B) étant disposé à l'intérieur de la surface d'étanchéité (44) de manière espacée de l'au moins une surface de chambre de combustion (40) et étant en particulier un trou taraudé ou un trou de noyau de coulée fermé, et un deuxième canal de gaz de fuite (38B) étant prévu, lequel s'étend à partir du deuxième évidement (29B) jusqu'à la surface périphérique extérieure (32B), jusqu'au premier évidement (28B), jusqu'au premier canal de gaz de fuite (30B) et/ou jusqu'au canal de ventilation (42B), le deuxième canal de gaz de fuite (38B) étant réalisé en particulier sous la forme d'un renfoncement qui s'étend dans la surface d'étanchéité (44).

13. Carter de vilebrequin (14) pour un moteur à combustion interne (10), comprenant :
- au moins une chambre de combustion (20) ;
- une surface périphérique extérieure (32C) ;
- une surface d'étanchéité (46) servant à réaliser l'étanchéité vis-à-vis d'un joint de culasse (16) ;
- un premier évidement (28C), qui est disposé à l'intérieur de la surface d'étanchéité (46) de manière espacée de l'au moins une chambre de combustion (20), le premier évidement (28C) étant un trou taraudé ou un trou de noyau de coulée fermé ; et
- un premier canal de gaz de fuite (30C), qui s'étend à partir du premier évidement (28C) jusqu'à la surface périphérique extérieure (32C) du carter de vilebrequin (14), le premier canal de gaz de fuite (30C) étant réalisé en particulier sous la forme d'un renfoncement qui s'étend dans la surface d'étanchéité (46).

14. Véhicule automobile, en particulier véhicule utilitaire, comprenant un moteur à combustion interne (10) selon l'une des revendications 1 à 6, un joint de culasse (16) selon l'une des revendications 7 à 10, une culasse (12) selon la revendication 11 ou la revendication 12, ou un carter de vilebrequin (14) selon la revendication 13.

15. Procédé permettant de dissiper un gaz de fuite, en particulier un gaz de fuite lent, provenant d'une chambre de combustion (20) d'un moteur à combustion interne (10), à partir d'une région d'étanchéité (18) entre une culasse (12), un joint de culasse (16) et un carter de vilebrequin (14) du moteur à combustion interne (10) servant à réaliser l'étanchéité de la chambre de combustion (20), comprenant :
- la collecte du gaz de fuite dans au moins un évidement (28A ; 28B ; 28C ; 29A ; 29B ; 29C) formé à l'intérieur de la région d'étanchéité (18), en particulier un trou taraudé ou un trou de noyau de coulée, qui est espacé de la chambre de combustion (20) du moteur à combustion interne (10) ; et
- l'évacuation guidée du gaz de fuite à partir de l'au moins un évidement (28A ; 28B ; 28C ; 29A ; 29B ; 29C) à l'extérieur de la région d'étanchéité (18) dans un environnement du moteur à combustion interne (10) et/ou dans un système de ventilation du moteur à combustion interne (10), en particulier un système de ventilation de carter de vilebrequin et/ou un système de ventilation de culasse,
- le premier évidement (28A ; 28B ; 28C) étant prévu dans une surface d'étanchéité (26 ; 36) du joint de culasse (16) et étant un trou taraudé, et le premier canal de gaz de fuite (30A) étant prévu dans une surface d'étanchéité (26, 36) du joint de culasse (16) ; ou
- le premier évidement (28A ; 28B ; 28C) étant prévu dans une surface d'étanchéité (46) du carter de vilebrequin (14) et étant un trou taraudé ou un trou de noyau de coulée fermé, et le premier canal de gaz de fuite (30C) étant prévu dans une surface d'étanchéité (46) du carter de vilebrequin (14) et s'étendant jusqu'à la première surface (32C) exposée à l'environnement du moteur à combustion interne (10) ; ou
- le premier canal de gaz de fuite (30A ; 30B ; 30C) étant prévu dans une surface d'étanchéité (44) de la culasse (12) et s'étendant à partir du premier évidement (28A ; 28B ; 28C) jusqu'au canal de ventilation (42B) du moteur à combustion interne (10).
